# EUROPÄISCHE PATENTSCHRIFT

(11) **EP 1 671 718 B1**
(45) Veröffentlichungstag und Bekanntmachung des Hinweises auf die Patenterteilung: **18.07.2007**
(21) Anmeldenummer: 05025494.5
(22) Anmeldetag: 23.11.2005
(51) Int. Cl.: B21D 53/10, F16C 17/00

(54) **Gleitlagerelement und Verfahren zur Herstellung einer gerollten Gleitlagerbuchse**
Sliding bearing element und method for making a rolled-up bearing bush
Elément de palier lisse et méthode de fabrication d'un coussinet lisse enroulé

(30) Priorität: 15.12.2004 DE 102004060258
(43) Veröffentlichungstag der Anmeldung: 21.06.2006
(73) Patentinhaber: Federal-Mogul Deva GmbH, 35260 Stadtallendorf (DE)
(72) Erfinder: Stadlmayr, August, 4693 Desselbrunn (AT); Schmidt, Achim, 35085 Ebsdorfergrund-Wittelsberg (DE)
(74) Vertreter: Fuchs

(56) Entgegenhaltungen:
- EP-A- 0 802 338
- DE-U1- 8 606 095
- US-A- 5 322 372

## Beschreibung

Die Erfindung betrifft ein Verfahren zur Herstellung einer Gleitlagerbuchse. Die Erfindung bezieht sich auch auf ein Gleitlagerelement mit einem Träger aus Metall, der Löcher aufweist, die mit einem Gleiteigenschaften aufweisenden Kunststoffmaterial gefüllt sind.

Gleitlagerelemente sind insbesondere Gleitlagerbuchsen, Anlaufscheiben und ebene Gleitelemente.

Aus der EP 0 802 338 B1 (nächstliegender Stand der Technik) ist eine gerollte Metall/Kunststoff-Verbundbuchse bekannt, bei deren Herstellung von einer metallischen Platine mit Löchern ausgegangen wird und die Platine einer Rundverformung unterworfen wird, so dass die Löcher zur Buchsenmitte hin konisch verformt werden. Anschließend erfolgt das Ausspritzen der Laufschicht in einer Spritzgieß- oder Spritzpressmaschine, wobei die Löcher zur Verankerung der Laufschicht ausgefüllt werden.

Andererseits sind Buchsen aus Vollmaterial mit dicker Wandung bekannt (z.B. deva glide der Federal Mogul DEVA GmbH). Die Wandstärke liegt bei ca. 5 mm bis 60 mm, damit Sackbohrungen eingebracht werden können, die mit einem gute Gleiteigenschaften aufweisenden Material gefüllt werden. Die Herstellung solcher Verbundmaterialbuchsen mit Gleitmaterialstopfen ist aufwendig, weil die Bohrungen erst nach der Fertigung des Buchsenrohlings eingebracht werden können.

Es ist daher Aufgabe der Erfindung, ein Verfahren bereit zu stellen, mit dem Buchsen mit Gleitmaterialeigenschaften aufweisenden Stopfen preiswert hergestellt werden können. Es ist auch Aufgabe der Erfindung, preiswerte Gleitelemente anzugeben.

Diese Aufgabe wird mit einem Verfahren gelöst, das folgende Verfahrensschritte aufweist:
- Zuschneiden einer Platine aus einem Metall,
- Einbringen von Löchern in die Platine, wobei jedes Loch mit mindestens einer nach innen vorspringenden Nase versehen wird,
- Einsetzen von Stopfen aus Gleiteigenschaften aufweisendem Kunststoffmaterial in die Löcher und
- Umformen der Platine zur Buchse.

Diese Aufgabe wird ebenfalls durch ein Gleitlagerelement gemäß Anspruch 15 gelöst.

Die nach innen vorstehende Nase aus Metall drückt beim Einpressen der Stopfen in das weichere Kunststoffmaterial und hält diese unverlierbar fest. Dadurch, dass die Stopfen vor dem Umformen eingesetzt werden, wird auf die Stopfen beim Rundbiegen zur Buchse aufgrund der dabei stattfindenden Lochdeformation ein zusätzlicher Klemmdruck ausgeübt, der die Stopfen zusätzlich fixiert. Aus einem z.B. zylindrischen Loch in der Platine wird beim Umformen zur Buchse ein konisches Loch.

Unter einem Loch wird ein Durchgangsloch oder ein Sackloch verstanden.

Das erfindungsgemäße Verfahren ermöglicht erstmals die Herstellung von Buchsen mit Löchern, die mit Kunststoffmaterial gefüllt werden, die Wandstärken von ≤5 mm aufweisen.

Die Nase kann sich über die gesamte Lochtiefe erstrecken, was insbesondere dann der Fall ist, wenn ein Durchgangsloch ausgestanzt wird. Es besteht aber auch die Möglichkeit, die Nase am Öffnungsrand des Lochs anzubringen, wobei zweckmäßigerweise von einer sich über die Lochlänge erstreckenden Nase ausgegangen wird, die dann entsprechend nachbearbeitet wird. In diesem Fall ist es von Vorteil, wenn die Nase an dem Öffnungsrand des Loches angebracht ist, der bei der fertigen Buchse innen liegt. Beim Umformen der Platine wird diese Nase zusätzlich in das Stopfenmaterial gedrückt.

Vorzugsweise wird die Platine aus einer Kupferlegierung hergestellt.
Die Platine wird vorzugsweise aus einer Kupfer-Zinn-, Kupfer-Zink- oder Kupfer-Aluminium-Legierung hergestellt.

Vorzugsweise werden runde oder eckige Löcher in die Platine eingebracht. Aus fertigungstechnischen Gründen sind einfache Geometrien bevorzugt.

Vorteilhafterweise wird die Nase mit einer scharfkantigen Spitze hergestellt. Dies erleichtert das Einsetzen der Stopfen, weil sich die Nase in das Stopfenmaterial einschneiden kann.

Vorzugsweise wird daher die Nase mit einer dreieckförmigen Gestalt hergestellt.

Die Flanken der Nase werden vorteilhafterweise gerundet hergestellt und gehen in die Lochkontur über. Dies hat den Vorteil, dass eine vollständige Ausfüllung des Lochs mit Stopfenmaterial erleichtert wird und das Stopfenmaterial im Bereich der Nase dicht an der Lochkontur anliegt.

Zur Herstellung der Stopfen wird vorzugsweise von einem Stab beispielsweise aus Kunststoffmaterial ausgegangen, dessen Außenabmessungen den Lochabmessungen ohne Berücksichtigung der Nase entsprechen, wobei Scheiben von diesem Stab zur Herstellung der Stopfen abgetrennt werden und die Stopfen in die Löcher eingesetzt werden.

Die Herstellung der Stäbe kann z.B. durch Strangpressen erfolgen. Das Abtrennen kann z.B. mechanisch mittels Sägen, Wasserstrahlschneiden oder dergleichen erfolgen. Eine weitere Möglichkeit ist das Pressen einzelner Stopfen in der benötigten Geometrie auf automatischen Pressen, ähnlich der Herstellung von Sinterteilen in großen Stückzahlen.

Das Einbringen der Stopfen in die Löcher im Trägerwerkstoff kann manuell, halbautomatisch oder vollautomatisch erfolgen. Dazu werden die Stopfen über dem Loch angesetzt und dann in das Loch eingepresst oder eingedrückt.

Vorzugweise werden die Stopfen vor dem Einsetzen auf eine Temperatur unter 0°C gekühlt und im gekühlten Zustand eingesetzt. Es ist von Vorteil, wenn die Stopfen in Trockeneis oder flüssigem Stickstoff unterkühlt werden und dann eingesetzt werden. Bei dieser Ausführungsform wird keine Presskraft benötigt, um die Stopfen in die Löcher einzusetzen.

Vorzugsweise werden Stopfen mit einer Dicke gleich der Wandstärke der Platine in die Löcher eingesetzt, die in diesem Fall Durchgangslöcher sind.

Als Material für die Stopfen kommt vorzugsweise PTFE in Frage. In das PTFE-Material können Füllstoffe eingelagert werden. Bevorzugte Füllstoffe sind Graphit, MoS₂ oder WS₂. Das Material sollte sowohl eine gewisse Plastizität als auch Elastizität aufweisen.

Das erfindungsgemäße Gleitlagerelement weist ein Träger aus mindestens einem Metall auf, der Löcher aufweist, wobei jedes Loch mindestens eine nach innen vorspringende Nase aufweist und mit einem eingesetzten Stopfen aus Gleiteigenschaften aufweisendem Kunststoffmaterial gefüllt ist.

Die Gleitlagerbuchsen können Wandstärken von 0,75 mm bis 5 mm bei Durchmessern von 50 mm bis 1500 mm aufweisen.

Die Löcher können versetzt zueinander angeordnet sein. Anordnung und Anzahl der Stopfen richten sich nach dem Anwendungsbereich. Eine versetzte, insbesondere überlappende Anordnung der Löcher und damit der Stopfen hat den Vorteil, dass die Stopfen während der Rotation der Buchse einen möglichst großen Bereich des Gegenläufers kontaktieren.

Vorzugsweise sind die Löcher rund, oval oder eckig.

Die Nase im Loch weist vorzugsweise eine scharfkantige Spitze auf, wobei die Nase vorzugsweise eine dreieckförmige Gestalt aufweist.

Vorzugsweise sind die Flanken der Nase gerundet und gehen in die Lochkontur über.

Die Stopfen weisen vorzugsweise PTFE auf, wobei die Stopfen auch Füllstoffe, wie z.B. MoS₂, WS₂ oder Graphit aufweisen können.

Die erfindungsgemäßen Buchsen werden vorzugsweise in Stahlwasserbauanlagen, in der Offshore-Industrie, Hütten- und Stahlwerke, Schwermaschinen, Kran- und Transportanlagen, Berg- und Tagebaumaschinen, Bau- und Erdbewegungsmaschinen eingesetzt.

Beispielhafte Ausführungsformen der Erfindung werden nachfolgend anhand der Zeichnungen näher erläutert. Es zeigen:
- Figur 1: eine Draufsicht auf eine gelochte Platine,
- Figuren 2-4: eine vergrößerte Darstellung eines Lochs gemäß dreier Ausführungsformen im Bereich X der Figur 1,
- Figur 5: einen Schnitt längs der Linie V-V durch die in Figur 2 gezeigte Lochkontur,
- Figur 6: eine perspektivische Ansicht einer gerollten Buchse, und
- Figur 7: einen Schnitt längs der Linie VII-VII durch die in Figur 6 gezeigte Buchse.

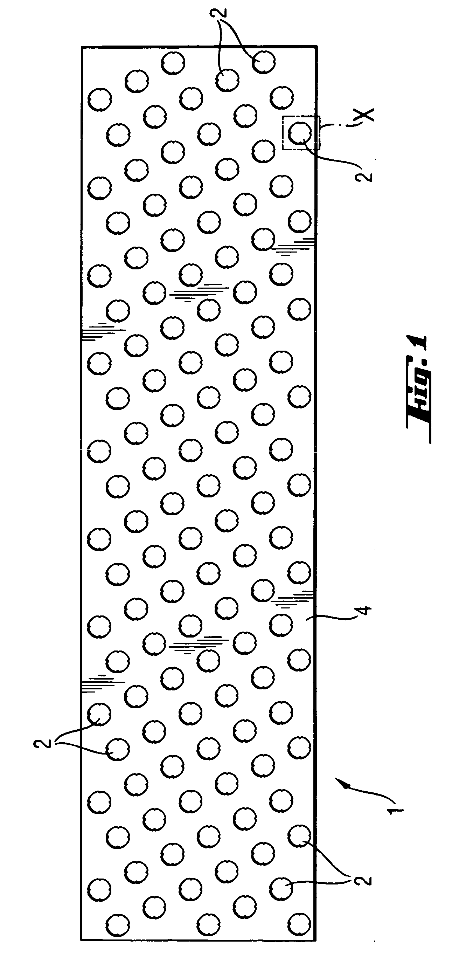

In der Figur 1 ist die Draufsicht auf eine Platine 1 aus dem Trägermaterial 4 dargestellt. Die Platine ist rechteckig, so dass daraus eine zylindrische Buchse hergestellt werden kann. Die Platine weist Löcher 2 auf, die in einer regelmäßigen Anordnung über die Platine verteilt sind. Es handelt sich hierbei um eine versetzte, überlappende Anordnung, wobei der Versatz in Querrichtung (senkrecht zur Längsrichtung der Platine) geringer als die halbe Lochteilung ist.

Die Platine 1 und damit das Trägermaterial 4 kann aus folgenden Legierungen bestehen: CuSn7ZnPb, CuAl10Ni, CuSn12.

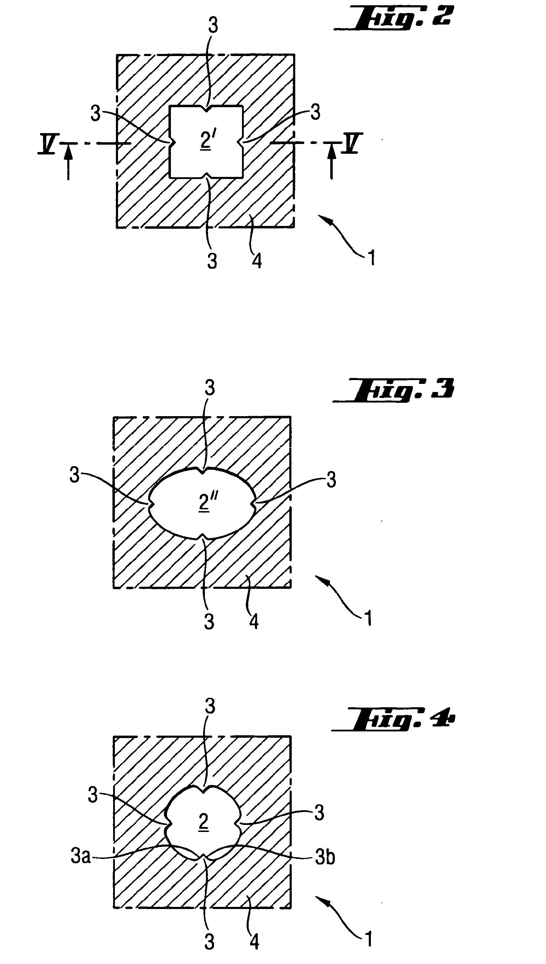

In den Figuren 2 bis 4 sind verschiedene Lochformen vergrößert dargestellt. In der Figur 2 ist ein quadratisches Loch 2' mit vier Nasen 3 dargestellt, wobei jeweils eine Nase 3 an einer Seitenfläche des Lochs 2' angeordnet ist.

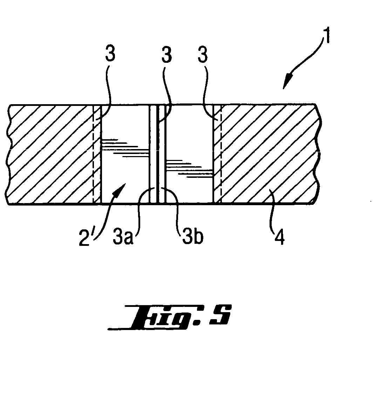

In der Figur 3 ist ein ovales Loch 2" mit ebenfalls vier gleichmäßig über den Umfang des Lochs verteilten Nasen 3 dargestellt.

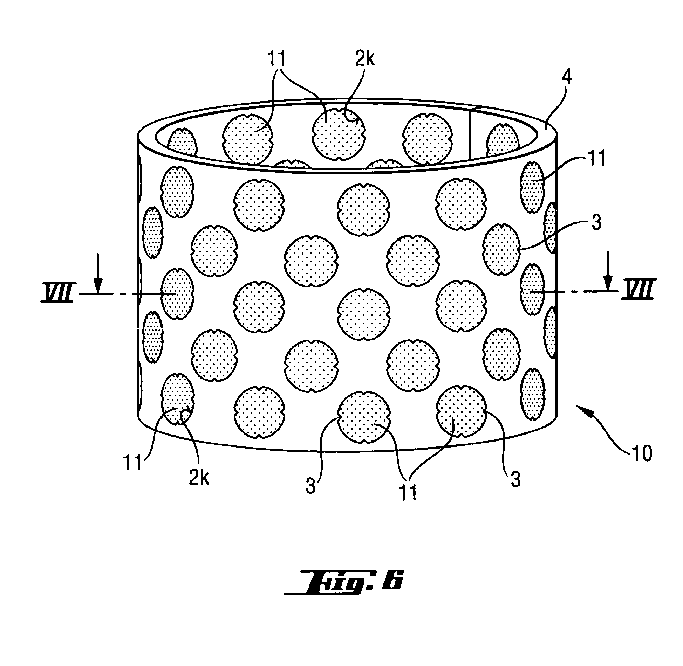

In der Figur 4 ist ein rundes Loch 2 mit ebenfalls vier gleichmäßig über den Umfang verteilten Nasen 3 zu sehen. Die Nasen besitzen eine in Draufsicht dreieckige Gestalt, wobei die Flanken 3a,b gerundet ausgeführt sind und in die Lochkontur übergehen.

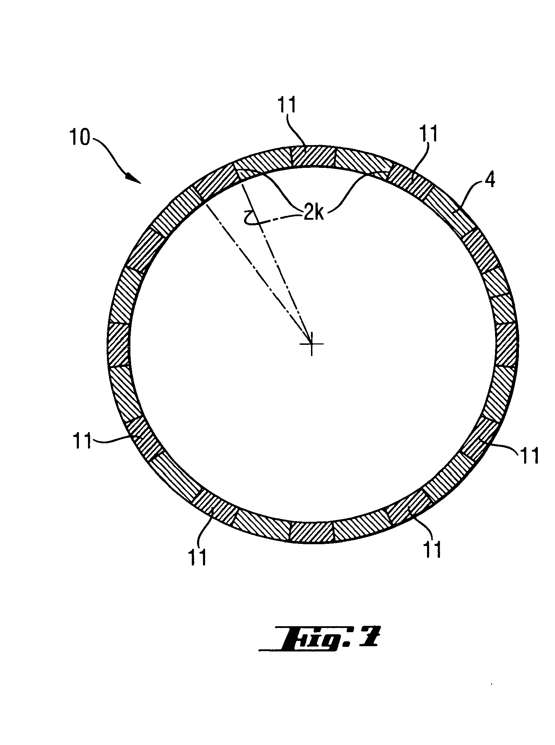

In der Figur 5 ist ein Schnitt durch das Loch 2' gemäß der Figur 2 längs der Linie V-V dargestellt. Es ist zu sehen, dass die Nasen 3 sich über die gesamte Lochtiefe erstrecken. In allen Fällen handelt es sich um Durchgangslöcher. Sacklöcher sind auch möglich.

In der Figur 6 ist eine gerollte Buchse 10 mit Stopfen 11 in den Löchern 2 dargestellt. Es handelt sich auch hier um eine versetzte Anordnung.

In der Figur 7 ist ein Schnitt längs der Linie VII-VII durch die in Figur 6 gezeigte Buchse 10 dargestellt. Es ist zu sehen, dass aus den ursprünglich zylindrischen Löchern 2 gemäß der Platine nach Figur 1 nunmehr im Wesentlichen konische Löcher 2k entstanden sind. Durch das Umformen und die Verringerung des Umfangs im Innern der Buchse 10 wird aufgrund der Erzeugung dieser konischen Löcher ein Zusammenpressen der in den Löchern befindlichen Stopfen 11 erreicht.

Durch die zusätzlich vorhandenen Nasen 3 wird ein fester Sitz der Stopfen 11 in der Buchse 10 garantiert.

### Bezugszeichen

- 1: Platine
- 2, 2', 2": Löcher
- 2k: konisches Loch
- 3: Nase
- 3a,b: Flanke
- 4: Trägermaterial

- 10: Buchse
- 11: Stopfen

## Patentansprüche

1. Verfahren zur Herstellung einer gerollten Buchse (10) mit folgenden Verfahrensschritten:
- Zuschneiden einer Platine (1) aus mindestens einem Metall
- Einbringen von Löchern (2,2',2",2k) in die Platine, wobei jedes Loch mit mindestens einer nach innen vorspringenden Nase (3) versehen wird,
- Einsetzen von Stopfen (11) aus Gleiteigenschaften aufweisendem Kunststoffmaterial in die Löcher und
- Umformen der Platine zur Buchse.

2. Verfahren nach Anspruch 1, **dadurch gekennzeichnet, dass** die Platine aus einer Kupferlegierung hergestellt wird.

3. Verfahren nach Anspruch 2, **dadurch gekennzeichnet, dass** die Platine aus einer Kupfer-Zinn-, Kupfer-Zink- oder Kupfer-Aluminium-Legierung hergestellt wird.

4. Verfahren nach einem der Ansprüche 1 bis 3, **dadurch gekennzeichnet, dass** runde oder eckige Löcher in die Platine eingebracht werden.

5. Verfahren nach einem der Ansprüche 1 bis 4, **dadurch gekennzeichnet, dass** die Nase mit einer scharfkantigen Spitze hergestellt wird.

6. Verfahren nach einem der Ansprüche 1 bis 5, **dadurch gekennzeichnet, dass** die Nase mit einer dreieckförmigen Gestalt hergestellt wird.

7. Verfahren nach einem der Ansprüche 1 bis 4, **dadurch gekennzeichnet, dass** die Flanken der Nase gerundet hergestellt werden und in die Lochkontur übergehen.

8. Verfahren nach einem der Ansprüche 1 bis 7, **dadurch gekennzeichnet, dass** ein Stab aus Kunststoffmaterial hergestellt wird, dessen Außenabmessungen den Lochabmessungen ohne Berücksichtigung der Nase entsprechen und dass Scheiben von diesem Stab zur Herstellung der Stopfen abgetrennt werden und dass die Stopfen in die Löcher eingesetzt werden.

9. Verfahren nach einem der Ansprüche 1 bis 8, **dadurch gekennzeichnet, dass** die Stopfen eingepresst werden.

10. Verfahren nach einem der Ansprüche 1 bis 8, **dadurch gekennzeichnet, dass** die Stopfen auf eine Temperatur unter 0°C gekühlt und im gekühlten Zustand eingesetzt werden.

11. Verfahren nach einem der Ansprüche 1 bis 10, **dadurch gekennzeichnet, dass** die Stopfen mit einer Dicke gleich der Wandstärke der Platine eingesetzt werden.

12. Verfahren nach einem der Ansprüche 1 bis 11, **dadurch gekennzeichnet, dass** Stopfen aus PTFE verwendet werden.

13. Verfahren nach einem der Ansprüche 1 bis 11, **dadurch gekennzeichnet, dass** Stopfen aus PTFE mit Füllstoffen verwendet werden.

14. Verfahren nach Anspruch 13, **dadurch gekennzeichnet, dass** Stopfen aus PTFE mit Graphit, MoS₂ oder WS₂ verwendet werden.

15. Gleitlagerelement, insbesondere gerollte Gleitlagerbuchse (10) mit einem Träger (4) aus mindestens einem Metall, der Löcher (2,2',2",2k) aufweist, die mit einem Gleiteigenschaften aufweisenden Kunststoffmaterial gefüllt sind, **dadurch gekennzeichnet, dass** jedes Loch (2,2',2",2k) mindestens eine nach innen vorspringende Nase (3) aufweist und dass die Löcher (2,2',2",2k) mit eingesetzten Stopfen (11) aus Gleiteigenschaften aufweisendem Kunststoffmaterial gefüllt sind.

16. Gleitlagerelement nach Anspruch 15, **dadurch gekennzeichnet, dass** die Löcher (2,2',2",2k) versetzt zueinander angeordnet sind.

17. Gleitlagerelement nach Anspruch 15 oder 16, **dadurch gekennzeichnet, dass** die Löcher (2,2',2",2k) rund, oval oder rechteckig sind.

18. Gleitlagerelement nach einem der Ansprüche 15 bis 17, **dadurch gekennzeichnet, dass** das Trägermaterial (4) aus einer Kupferlegierung besteht.

19. Gleitlagerelement nach Anspruch 18, **dadurch gekennzeichnet, dass** das Trägermaterial (4) aus einer Kupfer-Zinn- oder Kupfer-Aluminium-Legierung besteht.

20. Gleitlagerelement nach einem der Ansprüche 15 bis 19, **dadurch gekennzeichnet, dass** die Nase (3) eine scharfkantige Spitze aufweist.

21. Gleitlagerelement nach einem der Ansprüche 15 bis 20, **dadurch gekennzeichnet, dass** die Nase (3) eine dreieckförmige Gestalt aufweist.

22. Gleitlagerelement nach einem der Ansprüche 15 bis 21, **dadurch gekennzeichnet, dass** die Flanken (3a,b) der Nase (3) gerundet sind und in die Lochkontur übergehen.

23. Gleitlagerelement nach einem der Ansprüche 15 bis 22, **dadurch gekennzeichnet, dass** die Stopfen aus PTFE bestehen oder PTFE aufweisen.

24. Gleitlagerelement nach einem der Ansprüche 15 bis 23, **dadurch gekennzeichnet, dass** die Stopfen aus PTFE mit Füllstoffen bestehen.

25. Gleitlagerelement nach einem der Ansprüche 15 bis 24, **dadurch gekennzeichnet, dass** der Stopfen aus PTFE mit Graphit, MoS₂ oder WS₂ besteht.

26. Gleitlagerbuchse nach einem der Ansprüche 15 bis 25, **gekennzeichnet durch** eine Wandstärke von 0,75 mm bis 5 mm bei Durchmessern von 50 mm bis 1500 mm.

## Claims

1. Method for producing a wrapped bush (10) comprising the following method steps:
- cutting to size a blank (1) of at least one metal,
- making holes (2, 2', 2", 2k) in the blank, wherein each hole is provided with at least one inwardly projecting protrusion (3),
- inserting plugs (11) of plastics material having sliding properties in the holes and
- shaping the blank to form the bush.

2. Method according to Claim 1, **characterised in that** the blank is made of a copper alloy.

3. Method according to Claim 2, **characterised in that** the blank is made of a copper-tin, copper-zinc or copper-aluminium alloy.

4. Method according to any one of Claims 1 to 3, **characterised in that** round or angular holes are made in the blank.

5. Method according to any one of Claims 1 to 4, **characterised in that** the protrusion is made with a sharp-edged tip.

6. Method according to any one of Claims 1 to 5, **characterised in that** the protrusion is made with a triangular shape.

7. Method according to any one of Claims 1 to 4, **characterised in that** the flanks of the protrusion are rounded and merge into the hole contour.

8. Method according to any one of Claims 1 to 7, **characterised in that** a rod of plastics material is produced, the external dimensions of which rod correspond to the hole dimensions, without taking account of the protrusion, and that slices are separated from this rod in order to produce the plugs, and that the plugs are inserted in the holes.

9. Method according to any one of Claims 1 to 8, **characterised in that** the plugs are pressed in.

10. Method according to any one of Claims 1 to 8, **characterised in that** the plugs are cooled to a temperature below 0°C and inserted in the cooled state.

11. Method according to any one of Claims 1 to 10, **characterised in that** plugs of a thickness which is equal to the wall thickness of the blank are inserted.

12. Method according to any one of Claims 1 to 11, **characterised in that** plugs of PTFE are used.

13. Method according to any one of Claims 1 to 11, **characterised in that** plugs of PTFE with fillers are used.

14. Method according to Claim 13, **characterised in that** plugs of PTFE with graphite, MOS₂ or WS₂ are used.

15. Plain bearing element, in particular wrapped plain bearing bush (10) with a substrate (4) of at least one metal, which comprises holes (2, 2', 2", 2k) filled with a plastics material having sliding properties, **characterised in that** each hole (2, 2', 2", 2k) comprises at least one inwardly projecting protrusion (3), and that the holes (2, 2', 2", 2k) are filled with inserted plugs (11) of plastics material having sliding properties.

16. Plain bearing element according to Claim 15, **characterised in that** the holes (2, 2', 2", 2k) are disposed in a staggered manner.

17. Plain bearing element according to Claim 15 or 16, **characterised in that** the holes (2, 2', 2", 2k) are round, oval or rectangular.

18. Plain bearing element according to any one of Claims 15 to 17, **characterised in that** the substrate material (4) consists of a copper alloy.

19. Plain bearing element according to Claim 18, **characterised in that** the substrate material (4) consists of a copper-tin or copper-aluminium alloy.

20. Plain bearing element according to any one of Claims 15 to 19, **characterised in that** the protrusion (3) comprises a sharp-edged tip.

21. Plain bearing element according to any one of Claims 15 to 20, **characterised in that** the protrusion (3) has a triangular shape.

22. Plain bearing element according to any one of Claims 15 to 21, **characterised in that** the flanks (3a, b) of the protrusion (3) are rounded and merge into the hole contour.

23. Plain bearing element according to any one of Claims 15 to 22, **characterised in that** the plugs consist of PTFE or comprise PTFE.

24. Plain bearing element according to any one of Claims 15 to 23, **characterised in that** the plugs consist of PTFE with fillers.

25. Plain bearing element according to any one of Claims 15 to 24, **characterised in that** the plug consists of PTFE with graphite, MOS₂ or WS₂.

26. Plain bearing bush according to any one of Claims 15 to 25, **characterised by** a wall thickness of 0.75 mm to 5 mm with diameters of 50 mm to 1500 mm.

## Revendications

1. Méthode de fabrication d'un coussinet enroulé (10) comprenant les étapes de fabrication suivantes:
- découpe d'une platine (1) à base d'un métal au moins,
- réalisation d'orifices (2, 2', 2", 2k) dans la platine, chaque orifice étant muni d'au moins un ergot (3) en saillie vers l'intérieur,
- insertion dans les orifices, de bouchons (11) en matière plastique présentant des propriétés de glissement et
- usinage de la platine en coussinet.

2. Méthode selon la revendication 1, **caractérisée en ce que** la platine est fabriquée en un alliage à base de cuivre.

3. Méthode selon la revendication 2, **caractérisée en ce que** la platine est fabriquée en un alliage cuivre-étain, cuivre-zinc ou cuivre-aluminium.

4. Méthode selon l'une quelconque des revendications 1 à 3, **caractérisée en ce que** les orifices réalisés dans la platine sont ronds ou polygonaux.

5. Méthode selon l'une quelconque des revendications 1 à 4, **caractérisée en ce que** l'ergot est fabriqué avec une pointe à arêtes vives.

6. Méthode selon l'une quelconque des revendications 1 à 5, **caractérisée en ce que** l'ergot est fabriqué d'une forme triangulaire.

7. Méthode selon l'une quelconque des revendications 1 à 4, **caractérisée en ce que** les flancs de l'ergot sont fabriqués arrondis et se raccordent au contour du orifice.

8. Méthode selon l'une quelconque des revendications 1 à 7, **caractérisée en ce que** l'on fabrique une barre en matière plastique dont les dimensions extérieures correspondent aux dimensions des orifices sans tenir compte de l'ergot et **en ce que** l'on découpe des disques de cette barre pour la fabrication des bouchons et que l'on insère les bouchons dans les orifices.

9. Méthode selon l'une quelconque des revendications 1 à 8, **caractérisée en ce que** les bouchons sont enfoncés.

10. Méthode selon l'une quelconque des revendications 1 à 8, **caractérisée en ce que** les bouchons sont refroidis à une température inférieure à 0°C et insérés à l'état refroidi.

11. Méthode selon l'une quelconque des revendications 1 à 10, **caractérisée en ce que** les bouchons sont insérés avec une épaisseur égale à l'épaisseur de la paroi de la platine.

12. Méthode selon l'une quelconque des revendications 1 à 11, **caractérisée en ce que** l'on utilise des bouchons en PTFE.

13. Méthode selon l'une quelconque des revendications 1 à 11, **caractérisée en ce que** l'on utilise des bouchons en PTFE avec des matières de remplissage.

14. Méthode selon la revendication 13, **caractérisée en ce que** l'on utilise des bouchons en PTFE avec du graphite, du MoS₂ ou WS₂.

15. Elément de palier lisse, en particulier coussinet lisse enroulé (10) avec un support (4) à base d'un métal au moins, qui comporte des orifices (2, 2', 2", 2k) qui sont remplis d'une matière plastique présentant des propriétés de glissement, **caractérisé en ce que** chaque orifice (2, 2', 2", 2k) comprend un ergot (3) saillant vers l'intérieur et **en ce que** les orifices (2, 2', 2", 2k) avec les bouchons enfoncés (11) sont remplis de matière plastique présentant des propriétés de glissement.

16. Elément de palier lisse selon la revendication 15, **caractérisé en ce que** les orifices (2, 2', 2", 2k) sont disposés décalés entre eux.

17. Elément de palier lisse selon l'une quelconque des revendications 15 ou 16, **caractérisé en ce que** les orifices (2, 2', 2", 2k) sont ronds, ovales ou polygonaux.

18. Elément de palier lisse selon l'une quelconque des revendications 15 à 17, **caractérisé en ce que** le matériau du support (4) est constitué d'un alliage de cuivre.

19. Elément de palier lisse selon la revendication 18, **caractérisé en ce que** le matériau du support (4) est constitué d'un alliage cuivre-étain ou cuivre-aluminium.

20. Elément de palier lisse selon l'une quelconque des revendications 15 à 19, **caractérisé en ce que** l'ergot (3) présente une pointe à arêtes vives.

21. Elément de palier lisse selon l'une quelconque des revendications 15 à 20, **caractérisé en ce que** l'ergot (3) présente une forme triangulaire.

22. Elément de palier lisse selon l'une quelconque des revendications 15 à 21, **caractérisé en ce que** les flancs (3a, b) de l'ergot (3) sont arrondis et se raccordent au contour du orifice.

23. Elément de palier lisse selon l'une quelconque des revendications 15 à 22, **caractérisé en ce que** les bouchons sont constitués de PTFE ou comportent du PTFE.

24. Elément de palier lisse selon l'une quelconque des revendications 15 à 23, **caractérisé en ce que** les bouchons sont constitués de PTFE avec des matières de remplissage.

25. Elément de palier lisse selon l'une quelconque des revendications 15 à 24, **caractérisé en ce que** le bouchon est constitué de PTFE avec du graphite, du MoS₂ ou WS₂.

26. Elément de palier lisse selon l'une quelconque des revendications 15 à 25, **caractérisé par** une épaisseur de paroi de 0,75 mm à 5 mm avec des diamètres de 50 mm à 1500 mm.
